# EUROPÄISCHE PATENTSCHRIFT

(11) **EP 3 822 060 B1**
(45) Veröffentlichungstag und Bekanntmachung des Hinweises auf die Patenterteilung: **09.03.2022**
(21) Anmeldenummer: 19209700.4
(22) Anmeldetag: 18.11.2019
(51) Int. Cl.: B29C 49/20, B60K 15/03

(54) **VERFAHREN ZUR HERSTELLUNG EINES KUNSTSTOFFTANKS**
METHOD FOR PRODUCING A PLASTIC TANK
PROCÉDÉ DE FABRICATION D'UN RÉSERVOIR EN PLASTIQUE

(43) Veröffentlichungstag der Anmeldung: 19.05.2021
(73) Patentinhaber: Magna Energy Storage Systems GesmbH, 8261 Sinabelkirchen (AT)
(72) Erfinder: HUMENBERGER, Harald, 8181 St. Ruprecht (AT)
(74) Vertreter: Zangger, Bernd

(56) Entgegenhaltungen:
- WO-A1-94/12334
- DE-T2- 69 102 487
- JP-A- H03 231 827
- US-A1- 2016 052 386

## Beschreibung

### Gebiet der Erfindung

Die vorliegende Erfindung betrifft ein Verfahren zur Herstellung eines Kunststofftanks.

### Stand der Technik

Es ist bekannt, dass Kunststofftanks, die in jüngerer Zeit beispielsweise als Kraftstofftanks von Kraftfahrzeugen wie Personenkraftwagen und Lastkraftwagen verbaut werden, zusätzlich zu einer Reihe positiver Eigenschaften, problematisch sind in Bezug auf mögliche Verformungen des Kraftstofftanks. Bei üblichem Betrieb von Tanksystemen in Kraftfahrzeugen kann es in bestimmten Zonen des Tanksystems zu hohen Verformungen kommen. Verkettungen von Druck und Temperaturspitzen in Zonen des Tankes können, vor allem bei Kunststofftanks, hohe Relativbewegungen der Tankschalen bedingen und müssen durch konstruktive Maßnahmen beschränkt werden.

Stützkonzepte zur Verringerung der unerwünschten Verformungen der Kraftstofftanks, die aus dem Stand der Technik bekannt sind, verwenden zumeist karosseriefeste Anlagepunkte um Verformungen der Tankwände zu begrenzen. Insbesondere für unter Druck befindliche Tanksysteme reichen diese Maßnahmen jedoch nicht aus und es müssen zusätzliche Maßnahmen verwendet werden, um Verformungen zu vermindern. Oftmals wird die Schalendicke der Tankblase erhöht oder es werden versteifende Bauteile an der Tankwand befestigt, um die Verformung zu begrenzen. Allerdings ist die Anbringung von versteifenden Bauteilen an einer Tankwand bisher zeit- und kostenintensiv und wenig flexibel in Hinblick auf verwendbare Bauteil-Geometrien zur Versteifung.

Die US 2016/052386 A1 offenbart ein Verfahren zum Schweißen einer Faserverstärkung bei der Herstellung eines Objekts, das aus einer Anordnung eines Tanks und eines Füllrohrs ausgewählt ist, wobei das Objekt eine Wand aus thermoplastischem Material enthält, wobei die Faserverstärkung sowohl ein thermoplastisches Material enthält, das mit dem des Objekts kompatibel ist, als auch geschnittene Fasern oder lange Fasern oder Endlosfasern, die gewebt sein können oder nicht, wobei das Schweißverfahren umfasst: Erhitzen der Faserverstärkung, um die Faserverstärkung in einen geschmolzenen Zustand zu bringen; Schweißen der beheizten Faserverstärkung, in einer Form, an die Wand in einem zumindest teilweise geschmolzenen Zustand unter Verwendung des Drucks eines Gases, das die Wand gegen die Form aufbläst.

Aus der DE 691 02 487 T2 ist ein Verfahren zum Ausformen eines einstückigen Tanks aus Kunststoff für Kraftstoff bekannt, bei welchem eine Außenfläche eines insgesamt dünnwandigen, hohlen, luftdichten Trägers mit einem Fasermaterial beschichtet, der beschichtete Träger in eine Form eingesetzt, Druck auf den Innenraum des Trägers ausgeübt, Harz zwischen eine Innenfläche der Form und der Träger-Außenfläche eingespritzt, wodurch die Fasermaterialteile imprägniert werden, wobei der mit Druck beaufschlagte Träger dazu verwendet wird, das Kollabieren der imprägnierten Fasermaterialteile zu verhindern, das Harz ausgehärtet, die Form geöffnet, und der Tank aus der Form entfernt wird, wobei der Schritt der Beschichtung einer Außenfläche eines Trägers und des Einsetzens des Trägers in eine Form die Verwendung einer für Kraftstoff undurchlässigen Einlage als Träger umfaßt, um einen inneren hohlen Abschnitt des Tanks zu bilden, wobei der Träger für den ausgeformten Tank darüber hinaus eine gegen Kraftstoff beständige Einlage bildet.

### Zusammenfassung der Erfindung

Es ist eine Aufgabe der Erfindung, ein Verfahren zur Herstellung eines Kunststofftanks anzugeben, wobei der Kunststofftank gegen Verformungen geschützt ist. Dabei soll das Verfahren insbesondere effizient durchgeführt werden können und hinsichtlich der Versteifungsgeometrien flexibel sein.

Die Lösung der Aufgabe erfolgt durch ein Verfahren zur Herstellung eines Kunststofftanks gemäß den Merkmalen des Anspruchs 1, wobei zumindest eine Außenschicht der Tankwand des Kunststofftanks aus einem ersten Material besteht, wobei auf eine Außenschicht der Tankwand des Kunststofftanks in zumindest einem Bereich eine Verstärkungsplatte, die zumindest teilweise aus dem ersten Material besteht, angebracht wird, wobei zunächst die Tankwand als heißes Extrudat bereitgestellt wird, dass außerhalb eines formgebenden Werkzeugs die Verstärkungsplatte auf dem heißen Extrudat befestigt wird, nämlich angeschweißt wird, wobei außerhalb des formgebenden Werkzeugs die Verstärkungsplatte mittels eines ausfahrbaren Stempels auf dem Extrudat befestigt wird, wobei der Stempel kraft- oder weggesteuert in das heiße Extrudat eingedrückt wird, um außerhalb des formgebenden Werkzeugs die Verstärkungsplatte auf dem heißen Extrudat zu befestigen, dass danach das Extrudat mit der befestigten Verstärkungsplatte in das formgebende Werkzeug eingebracht wird und in dem formgebenden Werkzeug zur Tankwand des Kunststofftanks geformt wird, wodurch die Verstärkungsplatte stärker an der Tankwand befestigt wird, insbesondere mit der Tankwand stärker verschweißt.

Erfindungsgemäß wird eine Verstärkungsplatte als verstärkendes Element auf eine Tankwand aufgebracht, wobei die Aufbringung zweistufig erfolgt: zunächst wird die Verstärkungsplatte außerhalb eines formgebenden Werkzeugs nur leicht befestigt bzw. mit dem Extrudat in Kontakt gebracht. Da die Verstärkungsplatte zumindest teilweise aus dem selben Material besteht wie die Tankwand, insbesondere aus dem selben Kunststoff besteht oder diesen selben Kunststoff umfasst, kann die Verstärkungsplatte insbesondere einfach auf die Tankwand gedrückt werden, so dass die Verstärkungsplatte an die heiße Tankwand bzw. das Extrudat angeschmolzen bzw. angeschweißt wird. Die selbe Tankwand wird dann mit angebrachter Verstärkungsplatte, auch "Patch" genannt, in einem formgebenden Werkzeug in die Endform des Kunststofftanks geformt, wobei die Verstärkungsplatte durch die dabei herrschenden Bedingungen, insbesondere Drücke, noch stärker an der Tankwand befestigt wird bzw. mit dieser verschweißt bzw. stärker verschmolzen wird.

Außerhalb des formgebenden Werkzeugs wird die Verstärkungsplatte erfindungsgemäß mittels eines ausfahrbaren Stempels auf der Extrudat befestigt.

Erfindungsgemäß wird der Stempel kraft- oder weggesteuert in das heiße Extrudat eingedrückt, um außerhalb des formgebenden Werkzeugs die Verstärkungsplatte auf dem heißen Extrudat zu befestigen.

Durch die erfindungsgemäße Einbringung des Patches bzw. der Verstärkungsplatte außerhalb des Umform-Werkzeugs ist die abbildbare Komplexität der Oberflächengeometrie der Verstärkungsplatte sowie die erreichbaren Umformgrade sehr hoch.

Der Begriff "Außenschicht" bezieht sich auf eine außen liegende Schicht der Tankwand und kann bei einem fertig geformten Kunststofftank innen oder außen am Behälter liegen.

Die Tankwand ist bevorzugt mehrschichtig bzw. mehrlagig aufgebaut, kann jedoch auch aus einer einzigen Schicht bestehen.

Weiterbildungen der Erfindung sind in den abhängigen Ansprüchen, der Beschreibung sowie den beigefügten Zeichnungen angegeben.

Vorzugsweise besteht die Verstärkungsplatte aus einem faserverstärkten Kunststoff, wobei die Faserverstärkung in eine Matrix eingebettet ist und wobei die Matrix aus dem ersten Material besteht.

Das erste Material ist vorzugsweise High Density Polyethylen (HDPE).

Die Verstärkungsplatte ist besonders bevorzugt ein Glasfasergewebe.

Bevorzugt wird die Verstärkungsplatte außerhalb des formgebenden Werkzeugs auf dem Extrudat befestigt, während des Ausstoßes des Extrudats aus einem Extruder oder in einer Rastposition nach dem Ausstoß des Extrudats aus einem Extruder.

Das Extrudat bildet zum Zeitpunkt des Befestigens der Verstärkungsplatte auf dem heißen Extrudat außerhalb des formgebenden Werkzeugs bevorzugt einen Schlauch oder eine Platte, wird also bevorzugt schlauch- oder plattenförmig extrudiert.

Der Stempel kann die Verstärkungsplatte mittels eines Unterdrucks halten. Der Unterdruck wird vorzugsweise beendet, wenn die Verstärkungsplatte auf der heißen Extrudat befestigt ist. Der Stempel wird dann wieder von der Extrudat entfernt, insbesondere zurückgezogen.

Bevorzugt wird das Extrudat durch Blasformen in dem formgebenden Werkzeug zur Tankwand des Kunststofftanks geformt, wobei die Verstärkungsplatte mittels des Drucks beim Blasformen und/oder mittels eines Vakuums im formgebenden Werkzeug stärker an der Tankwand befestigt wird, insbesondere mit der Tankwand stärker verschweißt wird.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäß hergestellten Kunststofftanks.
- Fig. 2: ist eine schematische Darstellung eines erfindungsgemäßen Verfahrens zur Herstellung eines Kunststofftanks.
- Fig. 3: ist eine schematische Darstellung der Anbringung einer Verstärkungsplatte in einem erfindungsgemäßen Verfahren gemäß Fig. 2.

### Detaillierte Beschreibung der Erfindung

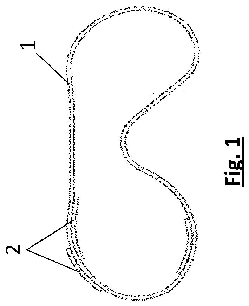

Die lokale Verformung einer Tankschale soll durch Anbringung von Strukturbauteilen, also Verstärkungsplatten 2, insbesondere faserverstärkten Strukturbauteilen, reduziert werden. Hierzu können diese Verstärkungsplatten 2, Strukturbauteile oder Patches innerhalb und/oder außerhalb des Tankes angebracht werden. Fig. 1 zeigt einen solchen Kunststofftank, wobei die Tankwand 1 des Kunststofftanks durch Anbringung von Verstärkungsplatten 2 bzw. Patches in verschiedenen Bereichen partiell verstärkt ist. Zumindest eine Außenschicht der Tankwand 1 des Kunststofftanks besteht aus HDPE. Auf die Außenschicht der Tankwand 1 des Kunststofftanks ist in mehreren Bereichen eine Verstärkungsplatte 2, die zumindest teilweise aus dem selben Material HDPE besteht, angebracht. Die Verstärkungsplatten 2 bestehen aus einem faserverstärkten Kunststoff, wobei die Faserverstärkung in eine Matrix eingebettet ist und wobei die Matrix aus dem High Density Polyethylen besteht.

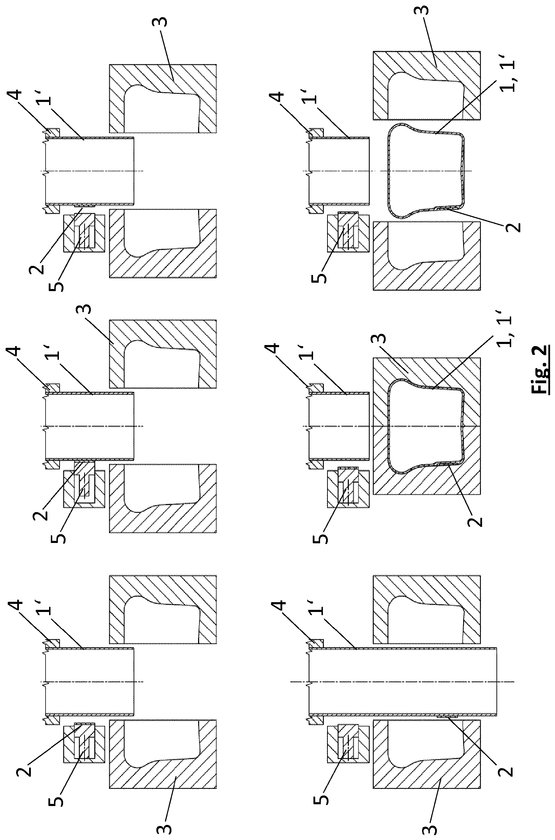

Zur Herstellung eines solchen Kunststofftanks, wird, wie in Fig. 2 schematisch dargestellt, zunächst die Tankwand 1 als heißes Extrudat 1' bereitgestellt, wobei das Extrudat 1' zunächst als Schlauch oder als Platte ausgebildet sein kann.

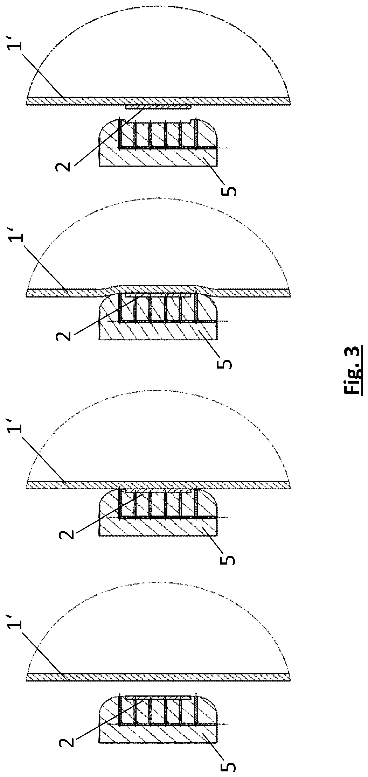

Außerhalb eines formgebenden Werkzeugs 3, in welchem später die Form der Tankschale ausgebildet wird, werden die Verstärkungsplatten 2 auf dem heißen Extrudat 1' befestigt, insbesondere durch Kontaktierung angeschmolzen - wie in Fig. 3 näher dargestellt ist.

In Fig. 2 ist ersichtlich, dass das heiße Extrudat 1' von einem Extruder 4 extrudiert wird, und während des Ausstoßes des Extrudats 1' aus dem Extruder 4, außerhalb des formgebenden Werkzeugs 3, die Verstärkungsplatte 2 auf der Extrudat 1' durch Kontaktierung befestigt wird. Das Extrudat 1' kann von oben nach unten in das Werkzeug 3 fließen. Der Stempel 5 zum Aufbringen der Verstärkungsplatte 2 kann zwischen der Düse des Extruders 4 und dem formgebenden Werkzeug 3 angeordnet sein.

Außerhalb des formgebenden Werkzeugs 3 wird die Verstärkungsplatte 2 mittels des ausfahrbaren Stempels 5 auf dem Extrudat 1' befestigt.

Danach wird das Extrudat 1' mit den befestigten Verstärkungsplatten 2 in das formgebende Werkzeug 3 eingebracht und in dem formgebenden Werkzeug 3 zur Tankwand 1 des Kunststofftanks geformt, wodurch die Verstärkungsplatten 2 stärker an der Tankwand 1 befestigt werden, nämlich mit der Tankwand 1 stärker verschmolzen bzw. verschweißt werden.

Das Extrudat 1' wird durch Blasformen in dem formgebenden Werkzeug 3 zur Tankwand 1 des Kunststofftanks geformt, wobei die Verstärkungsplatte 2 mittels des Drucks beim Blasformen und/oder mittels eines Vakuums im formgebenden Werkzeug 3 stärker an der Tankwand 1 befestigt wird, insbesondere mit der Tankwand 1 stärker verschweißt wird.

Das beschriebene Verfahren beruht somit auf der Positionierung und Verschmelzung des Matrixwerkstoffes HDPE der Faserpatches bzw. Verstärkungsplatten 2 mit dem HDPE Außenschichtmaterial der Tankschale außerhalb des formgebenden Werkzeuges 3.

Die beschriebene Verschmelzung findet in einem zweistufigen Prozess statt. In einem ersten Schritt wird das Patch 2 an einer definierten Stelle am Extrudat 1' positioniert und durch Kontaktierung von Halbzeug 1' und Faserpatch bzw. Verstärkungsplatte 2 befestigt. Durch den darauffolgenden Umformvorgang, insbesondere Blasformen, wird eine dauerhafte Verschmelzung der beiden Materialien bewerkstelligt und es bildet sich eine unlösliche stoffschlüssige Verbindung.

Fig. 3 zeigt schematisch die Anbringung der Verstärkungsplatten 2.

Das Extrudat 1' wird in eine definierte Position unter der Auslassdüse eines Extruders 4 und neben einem Stempel 5 gebracht. Das Faserpatch 2 ist auf diesem Stempel 5 positioniert und wird durch Applikation, insbesondere durch Ausfahren des Stempels 5, in Kontakt mit der heißen Platte 1' gebracht. Es kann sich hierbei um ein erhitztes oder auf Raumtemperatur befindliches Patch bzw. Verstärkungsplatte 2 handeln.

Das Faserpatch 2 wird auf dem Stempel 5 durch die Beaufschlagung mit einem Unterdruck in Position gehalten. Dieser Unterdruck wird vorzugsweise durch eine umlaufende Nut oder durch den Einsatz von Bohrungen realisiert. Bei der Anbringung des Stempels 5 verbleibt der Unterdruck bis die Positionierung abgeschlossen ist.

Zur Aufbringung des notwendigen Anpressdruckes wird der Stempel 5 bis zu einer gewissen Endposition kraft- oder weggesteuert in die teilplastifizierte Extrudat 1' eingedrückt. Zu diesem Zweck können die Randbereiche des Stempels 5 mit einer Schräge versehen sein. Die Anpressung des Glasfaserpatches 2 an das Extrudat 1' kann zusätzlich durch eine umlaufende Vakuumnut oder umlaufende Vakuumbohrungen verstärkt werden. Hierbei wird das Extrudat 1' zusätzlich durch die Vakuumnut oder die Vakuum-Bohrungen an die Oberfläche des Stempels 5 gesaugt.

Nach erfolgter Anpresszeit wird das Vakuum für die Befestigung des Patches 2 deaktiviert und der Stempel 5 verfährt ohne Faserpatch 2 wieder in die Ausgangsposition.

Das nunmehr mit dem Faserpatch bzw. der Verstärkungsplatte 2 armierte Extrudat 1' wird dem Blasformvorgang zugeführt, in dem durch die Aufbringung von werkzeugseitigem Über- und/oder Unterdruck eine bleibende stoffschlüssige Verbindung von Faserpatch 2 und der nunmehr entstandenen Tankwand 1 entsteht.

### Bezugszeichenliste

- 1: Tankwand
- 1': Extrudat
- 2: Verstärkungsplatte
- 3: Formgebendes Werkzeug
- 4: Extruder
- 5: Stempel

## Patentansprüche

1. Verfahren zur Herstellung eines Kunststofftanks, wobei zumindest eine Außenschicht der Tankwand (1) des Kunststofftanks aus einem ersten Material besteht, wobei auf eine Außenschicht der Tankwand (1) des Kunststofftanks in zumindest einem Bereich eine Verstärkungsplatte (2), die zumindest teilweise aus dem ersten Material besteht, angebracht wird, wobei zunächst die Tankwand (1) als heißes Extrudat (1' ) bereitgestellt wird,
**dadurch gekennzeichnet, dass** außerhalb eines formgebenden Werkzeugs (3) die Verstärkungsplatte (2) auf dem Extrudat (1' ) befestigt wird, nämlich angeschweißt wird, wobei außerhalb des formgebenden Werkzeugs (3) die Verstärkungsplatte (2) mittels eines ausfahrbaren Stempels (5) auf dem Extrudat (1' ) befestigt wird, wobei der Stempel (5) kraft- oder weggesteuert in das heiße Extrudat (1' ) eingedrückt wird, um außerhalb des formgebenden Werkzeugs (3) die Verstärkungsplatte (2) auf dem heißen Extrudat (1' ) zu befestigen, dass danach das Extrudat (1' ) mit der befestigten Verstärkungsplatte (2) in das formgebende Werkzeug (3) eingebracht wird und in dem formgebenden Werkzeug (3) zur Tankwand (1) des Kunststofftanks geformt wird, wodurch die Verstärkungsplatte (2) stärker an der Tankwand (1) befestigt wird, insbesondere mit der Tankwand (1) stärker verschweißt.

2. Verfahren nach Anspruch 1,
**dadurch gekennzeichnet, dass** die Verstärkungsplatte (2) aus einem faserverstärkten Kunststoff besteht, wobei die Faserverstärkung in eine Matrix eingebettet ist und wobei die Matrix aus dem ersten Material besteht, wobei das erste Material vorzugsweise High Density Polyethylen ist, wobei die Verstärkungsplatte besonders bevorzugt ein Glasfasergewebe ist.

3. Verfahren nach zumindest einem der vorhergehenden Ansprüche, **dadurch gekennzeichnet, dass** die Verstärkungsplatte (2) außerhalb des formgebenden Werkzeugs (3) auf dem Extrudat (1' ) befestigt wird während des Ausstoßes des Extrudats (1' ) aus einem Extruder (4) oder in einer Rastposition nach dem Ausstoß des Extrudats (1') aus einem Extruder (4).

4. Verfahren nach zumindest einem der vorhergehenden Ansprüche, **dadurch gekennzeichnet, dass** das Extrudat (1') zum Zeitpunkt des Befestigens der Verstärkungsplatte (2) auf dem heißen Extrudat (1') außerhalb des formgebenden Werkzeugs (3) einen Schlauch oder eine Platte bildet.

5. Verfahren nach zumindest einem der vorhergehenden Ansprüche, **dadurch gekennzeichnet, dass** der Stempel (5) die Verstärkungsplatte (2) mittels eines Unterdrucks hält, wobei der Unterdruck vorzugsweise beendet wird, wenn die Verstärkungsplatte (2) auf dem heißen Extrudat (1' ) befestigt ist.

6. Verfahren nach zumindest einem der vorhergehenden Ansprüche, **dadurch gekennzeichnet, dass** das Extrudat (1' ) durch Blasformen in dem formgebenden Werkzeug (3) zur Tankwand (1) des Kunststofftanks geformt wird, wobei die Verstärkungsplatte (2) mittels des Drucks beim Blasformen und/oder mittels eines Vakuums im formgebenden Werkzeug (3) stärker an der Tankwand (1) befestigt wird, insbesondere mit der Tankwand (1) stärker verschweißt.

## Claims

1. Method for producing a plastic tank, wherein at least one outer layer of the tank wall (1) of the plastic tank is composed of a first material, wherein a reinforcing sheet (2), which is composed at least partially of the first material, is attached to an outer layer of the tank wall (1) of the plastic tank in at least one region, wherein first of all the tank wall (1) is prepared as a hot extrudate (1'), **characterized in that** the reinforcing sheet (2) is secured, in particular welded, on the extrudate (1') outside a shaping tool (3), wherein outside the shaping tool (3), the reinforcing sheet (2) is secured on the extrudate (1') by means of an extendable ram (5), wherein the ram (5) is pressed into the hot extrudate (1') in a force- or travel-controlled manner in order to secure the reinforcing sheet (2) on the hot extrudate (1') outside the shaping tool (3),
**in that** the extrudate (1') is then introduced with the secured reinforcing sheet (2) into the shaping tool (3), and is shaped in the shaping tool (3) to form the tank wall (1) of the plastic tank, whereby the reinforcing sheet (2) is secured more strongly on the tank wall (1), in particular welded more strongly to the tank wall (1).

2. Method according to Claim 1,
**characterized in that** the reinforcing sheet (2) is composed of a fibre-reinforced plastic, wherein the fibre reinforcement is embedded into a matrix and wherein the matrix is composed of the first material, wherein the first material is preferably high-density polyethylene, wherein the reinforcing sheet is particularly preferably a woven glass fibre structure.

3. Method according to at least one of the preceding claims, **characterized in that** the reinforcing sheet (2) is secured on the extrudate (1') outside the shaping tool (3) during the discharge of the extrudate (1') from an extruder (4) or in a rest position after the discharge of the extrudate (1') from an extruder (4).

4. Method according to at least one of the preceding claims, **characterized in that** the extrudate (1') forms a hose or a sheet at the point in time when the reinforcing sheet (2) is secured on the hot extrudate (1') outside the shaping tool (3).

5. Method according to at least one of the preceding claims, **characterized in that** the ram (5) holds the reinforcing sheet (2) by means of a vacuum, wherein the vacuum is preferably ended when the reinforcing sheet (2) has been secured on the hot extrudate (1').

6. Method according to at least one of the preceding claims, **characterized in that** the extrudate (1') is shaped to form the tank wall (1) of the plastic tank by blow moulding in the shaping tool (3), wherein the reinforcing sheet (2) is secured more strongly on the tank wall (1), in particular welded more strongly to the tank wall (1), by means of the pressure during the blow moulding and/or by means of a vacuum in the shaping tool (3).

## Revendications

1. Procédé de fabrication d'un réservoir en plastique, au moins une couche extérieure de la paroi (1) du réservoir en plastique comprenant un premier matériau, une plaque de renforcement (2), qui comprend au moins partiellement le premier matériau, étant fixée dans au moins une zone sur une couche extérieure de la paroi (1) du réservoir en plastique, la paroi de réservoir (1) étant d'abord fournie sous la forme d'un extrudat chaud (1'),
**caractérisé en ce que** la plaque de renforcement (2) est fixée, notamment soudée, sur l'extrudat (1') à l'extérieur d'un outil de formage (3), la plaque de renforcement (2) étant fixée sur l'extrudat (1') au moyen d'un poinçon extensible (5) à l'extérieur de l'outil de formage (3), le poinçon (5) étant enfoncé dans l'extrudat chaud (1') en étant commandé en force ou en déplacement afin de fixer la plaque de renforcement (2) sur l'extrudat chaud (1') à l'extérieur de l'outil de formage (3), puis **en ce que** l'extrudat (1') pourvu de la plaque de renforcement (2) fixée est introduit dans l'outil de formage (3) et mis en forme dans l'outil de formage (3) pour obtenir la paroi (1) du réservoir en plastique, ce qui fixe la plaque de renforcement (2) plus fortement à la paroi de réservoir (1), en particulier la soude plus fortement avec la paroi de réservoir (1).

2. Procédé selon la revendication 1,
**caractérisé en ce que** la plaque de renforcement (2) comprend une matière synthétique renforcée de fibres, le renfort de fibres étant noyé dans une matrice et la matrice comprenant le premier matériau, le premier matériau étant de préférence du polyéthylène à haute densité, la plaque de renforcement étant de manière particulièrement préférée un tissu en fibres de verre.

3. Procédé selon l'une au moins des revendications précédentes, **caractérisé en ce que** la plaque de renforcement (2) est fixée sur l'extrudat (1') à l'extérieur de l'outil de formage (3) lors de l'éjection de l'extrudat (1') d'une extrudeuse (4) ou dans une position d'encliquetage après l'éjection de l'extrudat (1') d'une extrudeuse (4).

4. Procédé selon l'une au moins des revendications précédentes, **caractérisé en ce que** l'extrudat (1') forme un tuyau ou une plaque au moment de la fixation de la plaque de renforcement (2) sur l'extrudat chaud (1') à l'extérieur de l'outil de formage (3).

5. Procédé selon l'une au moins des revendications précédentes, **caractérisé en ce que** le poinçon (5) maintient la plaque de renforcement (2) au moyen d'une dépression, la dépression étant de préférence terminée lorsque la plaque de renforcement (2) est fixée sur l'extrudat chaud (1').

6. Procédé selon l'une au moins des revendications précédentes, **caractérisé en ce que** l'extrudat (1') est formé par soufflage dans l'outil de formage (3) pour obtenir la paroi (1) du réservoir en plastique, la plaque de renforcement (2) étant fixée plus fortement à la paroi de réservoir (1), notamment soudée plus fortement avec la paroi de réservoir (1), à l'aide de la pression lors du soufflage et/ou à l'aide d'une dépression dans l'outil de formage (3)
